# EUROPEAN PATENT APPLICATION

(11) **EP 4 737 273 A1**
(43) Date of publication of application: **06.05.2026**
(21) Application number: 25211992.0
(22) Date of filing: 29.10.2025
(51) Int. Cl.: B62D 6/00

(54) **STEER-BY-WIRE STEERING SYSTEM**

(30) Priority: 05.11.2024 JP 2024193397
(71) Applicant: JTEKT CORPORATION, Kariya-shi, Aichi-ken, 448-8652 (JP)
(72) Inventor: TAKEBAYASHI, Akihiro, Kariya-shi, Aichi-ken, 448-8652 (JP); MIYAKE, Junya, Kariya-shi, Aichi-ken, 448-8652 (JP); NAMIKAWA, Isao, Kariya-shi, Aichi-ken, 448-862 (JP); YOSHIDA, Kenji, Kariya-shi, Aichi-ken, 448-8652 (JP); KUDO, Yoshio, Toyota-shi, Aichi-ken, 471-8571 (JP)
(74) Representative: Winter, Brandl - Partnerschaft mbB

(57) **Abstract**

A steer-by-wire steering system including: an operation member (10) to be operated by a driver; a reaction force applying device (12) configured to apply an operation reaction force to the operation member (10); a steering device(16) including a steering motor (38) that is an electric motor as a drive source and configured to steer a wheel (14); and a controller (40, 42) configured to control the reaction force applying device (12) and the steering device (16), wherein the controller (40, 42) determines the operation reaction force including a steering-current-dependent component which is a component based on a current supplied to the steering motor (38) and a steering-speed-dependent correction component to reduce the steering-current-dependent component based on a steering speed; and wherein the controller (40, 42) determines the steering-speed-dependent correction component such that when the steering speed exceeds a set speed, the steering-speed-dependent correction component is not larger than a value at the set speed.

## Description

### TECHNICAL FIELD

The present disclosure relates to a steer-by-wire steering system of a vehicle.

### BACKGROUND ART

In a steer-by-wire type steering system (hereinafter referred to as "steer-by-wire system" where appropriate), an operation member such as a steering wheel is not mechanically connected to wheels to be steered. Therefore, the steer-by-wire system is provided with a reaction force applying device for applying an operation reaction force to the operation member. In general, the operation reaction force is preferably set to a magnitude corresponding to a load of a steering device, that is, a magnitude corresponding to a steering force for steering the wheels, and the operation reaction force may be determined based on an estimated steering force. Basically, in a case where the steering device has a steering motor, which is an electric motor, as a drive source, a current corresponding to the steering force is supplied to the steering motor. Thus, the steering force can be estimated based on the current. Therefore, the operation reaction force may be determined based on the steering force estimated based on the supply current. However, a damping force due to mechanical friction and the like is generated in the steering device. In a steer-by-wire system described in Japanese Patent Application Publication No. 2023-8890, for example, the steering force estimated based on the current supplied to the steering motor is corrected based on a steering speed.

### SUMMARY

In view of characteristics of electric motors, the supply current has an upper limit. Even if steering of the wheels at a high speed is required, it is not always possible to supply a current corresponding to the speed. On the other hand, in the steer-by-wire system described in the above-mentioned patent document, for example, the correction based on the damping force is simply performed such that the steering force to be estimated decreases with an increase in the steering speed. Therefore, in the above-mentioned steer-by-wire system, when the steering speed increases to some extent, a difference between an actual steering force and the estimated steering force is generated, and the operation reaction force is not appropriate. This may cause an unnatural feeling in the steering operation of the driver. Thus, there is much room for improvement in determination of the operation reaction force in the steer-by-wire system. The utility of the steer-by-wire system is improved by some improvement. Accordingly, one aspect of the present disclosure relates to a steer-by-wire steering system with high utility.

In one aspect of the present disclosure, a steer-by-wire steering system includes: an operation member to be operated by a driver; a reaction force applying device configured to apply an operation reaction force to the operation member; a steering device including a steering motor that is an electric motor as a drive source and configured to steer a wheel; and a controller configured to control the reaction force applying device and the steering device. The controller determines the operation reaction force including a steering-current-dependent component which is a component based on a current supplied to the steering motor and a steering-speed-dependent correction component to reduce the steering-current-dependent component based on a steering speed. The controller determines the steering-speed-dependent correction component such that when the steering speed exceeds a set speed, the steering-speed-dependent correction component is not larger than a value at the set speed.

According to the steer-by-wire system of the present disclosure, since an upper limit is set for the steering-speed-dependent correction component, a component of the steering reaction force which is an index of the steering force, i.e., a steering-force-dependent component, does not become too small even when the steering speed becomes high exceeding a certain level. As a result, even when the steering speed becomes high exceeding a certain level, a proper operation reaction force is suitably maintained, thus preventing the driver from feeling unnatural with respect to steering. As will be described in detail later, the setting of the upper limit for the steering-speed-dependent correction component is particularly effective, for example, in a case of a fast steering operation to recover a wheel skid (slip) on a low-µ road.

### Various Forms

As described above, the "steering-current-dependent component" in the present disclosure is a main component as an index of the steering force, which is a force generated by the steering device to steer the wheel. In a case where the steering device is configured such that right and left wheels are steered by moving, to the left and right, a steering rod (rack bar) connecting the right and left wheels, the steering force can be considered as a force in the axial direction, namely, an axial force, that acts on the steering rod. As explained above, the "steering-speed-dependent correction component" may be considered, for example, as the component that indicates the damping force caused by the mechanical structure of the steering device. The "steering-speed-dependent correction component" is a component that compensates for a component that increases with an increase in the steering speed, namely, a component that greatly reduces the steering-current-dependent component. In this respect, the "steering speed" is generally a change speed of a turning angle (toe angle) of the wheel to be steered. However, in a case where there is a relationship between a rotational speed of the steering motor and a change speed of the turning angle of the wheel in which the rotational speed and the change speed of the turning angle have a predetermined gear ratio, the steering speed may be considered as the rotational speed of the steering motor or the steering speed may be considered as a motion speed of components of the steering device such as the steering rod.

The "set speed" may be set to a value at which the steering speed can be regarded as exceeding a speed in a normal steering operation when the steering speed exceeds the set speed. To put it simply, the set speed may be set to a value at which it is estimated that an excessive steering operation is being performed. From another viewpoint related to N-T characteristics (characteristics between rotational speed and torque) of the steering motor which is an electric motor, the set speed may be set to a speed at which the torque that can be generated by the steering motor according to the N-T characteristics falls within a range from not less than 40% to not greater than 60% of a maximum torque. In a case where such an upper limit is set, the steering-speed-dependent correction component may be determined so as to increase with an increase in the steering speed (e.g., so as to linearly increase) when the steering speed is not higher than the set speed.

In the steer-by-wire system of the present disclosure, the operation reaction force may be determined so as to further include a steering-acceleration-dependent correction component for reducing the steering-current-dependent component based on steering acceleration. This "steering-acceleration-dependent correction component" may be considered as a component that indicates an inertial force (inertia) relating to the operation of the steering device. In a situation such as an operation-amount decreasing motion of the operation member, the steering acceleration changes relatively greatly. As will be explained in detail later, the steering-acceleration-dependent correction component compensates for a deviation of the operation reaction force. Inclusion of this component enables an operation feeling in such a situation to be kept appropriate. However, this component may undesirably give an unnatural feeling with respect to the steering operation in a case where the steering acceleration is too great because of a delay of the operation reaction force, more specifically, a delay of the steering-force-dependent component, which is one component of the operation reaction force. In a case where the steering-acceleration-dependent correction component is employed, it is desirable that the component does not become larger than a value at set acceleration when the steering acceleration exceeds the set acceleration.

The "set acceleration" may be set to a value at which the steering acceleration is regarded as exceeding acceleration in a normal steering operation when the steering acceleration exceeds the set acceleration. In other words, the set acceleration may be set to a value at which it can be estimated that a steering operation in an emergency is being performed. Specifically, the set acceleration may be set to a value at a time when an operation (reciprocating operation) of the operation member at a frequency ranging from not lower than 1.5 Hz to not higher than 2.5 Hz is performed at the set speed that is set for the steering speed, for example. In a case where such an upper limit is set, the steering-acceleration-dependent correction component may be determined so as to increase with an increase in the steering acceleration (e.g., so as to linearly increase) when the steering acceleration is not greater than the set acceleration.

### BRIEF DESCRIPTION OF DRAWINGS

The objects, features, advantages, and technical and industrial significance of the present disclosure will be better understood by reading the following detailed description of an embodiment, when considered in connection with the accompanying drawings, in which:
FIG. 1 is a view showing an overall configuration of a steering system according to one embodiment;
FIG. 2 is a block diagram showing a functional configuration of a controller of the steering system according to the embodiment;
FIG. 3A is a graph showing characteristics of an output steering speed relative to an input steering speed in a limit processor of a steering-speed-dependent correction component determining portion;
FIG. 3B is a graph showing N-T characteristics (characteristics between motor rotational speed and torque);
FIG. 3C is a graph showing characteristics of output steering acceleration relative to input steering acceleration in a limit processor of a steering-acceleration-dependent correction component determining portion;
FIG. 3D is a graph showing a change in a steering-force-dependent component of a reaction force torque in a case where a steering speed is increased with a lapse of time; and
FIG. 3E is a graph showing a change in a deviation of the steering-force-dependent component of the reaction force torque due to a change in the steering speed, namely, a phase deviation.

### DESCRIPTION

Referring to the drawings, there will be described below in detail a steer-by-wire steering system according to one embodiment of the present disclosure. It is to be understood that the present disclosure is not limited to the details of the following embodiment but may be embodied based on the forms described in Various Forms and may be changed and modified based on the knowledge of those skilled in the art.

### 1. Overall Configuration of Steering System

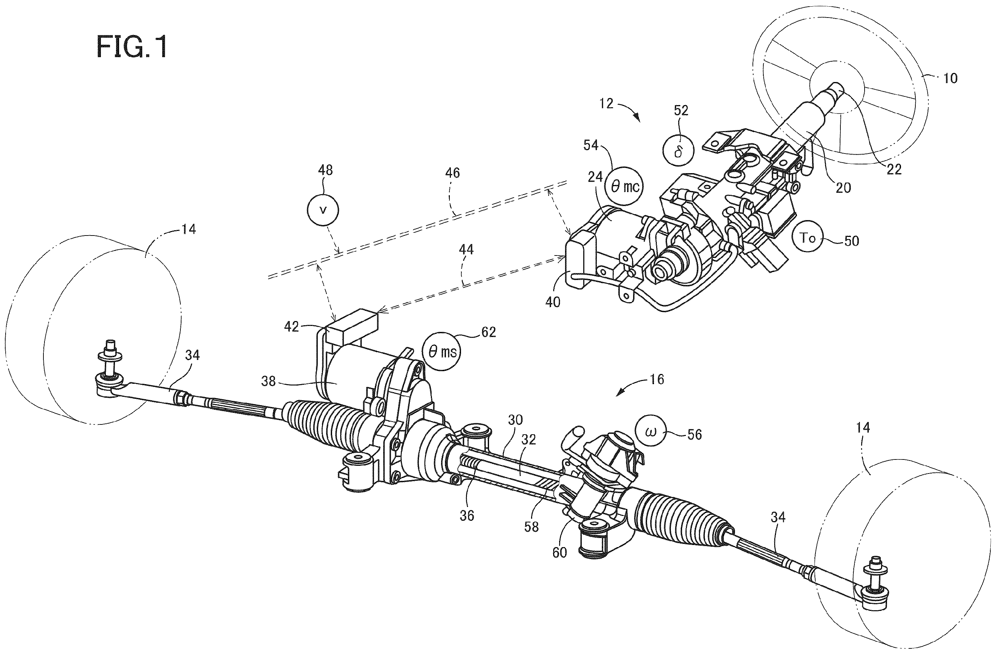

The steering system of the embodiment (hereinafter referred to as "the present steering system" or "the present system" where appropriate) is a steer-by-wire steering system capable of steering wheels without depending on an operation force of a driver applied to an operation member. As illustrated in FIG. 1, the steering system includes a handle (steering wheel) 10 functioning as the operation member, a reaction force actuator 12 functioning as a reaction force applying device to which the handle 10 is connected, and a steering actuator 16 functioning as a steering device to which two wheels 14 (i.e., left and right wheels 14), each functioning as a steerable wheel, are connected to steer the wheels 14 together. The handle 10 is rotated by the driver, and the reaction force actuator 12 receives the rotational operation of the handle 10 and applies, with respect to the handle 10, namely, with respect to the operation of the handle 10, a reaction force (hereinafter referred to as an "operation reaction force" where appropriate) against the operation of the handle 10.

The reaction force actuator 12 includes: a steering column 20 supported by a reinforcement of an instrument panel; a steering shaft 22 rotatably held by the steering column 20; and a reaction force motor 24, which is an electric motor, for applying a rotational torque to the steering shaft 22 via a power transmission mechanism. The handle 10 is attached to a rear end portion of the steering shaft 22. Though not explained in detail, the power transmission mechanism includes a worm attached to a motor shaft of the reaction force motor 24 and a worm wheel attached to the steering shaft 22 and meshing the worm. The reaction force motor 24 is a three-phase brushless DC motor and functions as a drive source of the reaction force actuator 12. Owing to the torque generated by the reaction force motor 24, a reaction force torque as the operation reaction force is applied to the handle 10 connected to the steering shaft 22.

The steering actuator 16 includes: a generally cylindrical housing 30 supported by a chassis in a posture extending in the right-left direction; a steering rod (rack bar) 32 supported by the housing 30 so as to be unrotatable and movable in the right-left direction; and a pair of tie rods 34 connected to right and left ends of the steering rod 32 via respective ball joints. One end of each tie rod 34 is connected to the corresponding wheel 14 via the ball joint. Specifically, the tie rod 34 is connected, via the ball joint, to a knuckle arm of a steering knuckle that rotatably holds the wheel 14 and that is held by a suspension arm so as to be turnable.

A threaded groove 36 is formed on the steering rod 32. Though not illustrated, a nut holding bearing balls and threadedly engaging the threaded groove 36 is held in the housing 30 such that the nut is rotatable and immovable in the right-left direction. That is, a ball screw mechanism is constituted by the steering rod 32 and the nut. A steering motor 38, which is an electric motor, is attached to the housing 30. The steering motor 38 rotates the nut via a power transmission mechanism. Though not illustrated, the power transmission mechanism includes a pulley attached to the motor shaft of the steering motor 38 and a timing belt looped over the pulley and the outer circumference of the nut. The steering motor 38 is a three-phase brushless DC motor and functions as a drive source of the steering actuator 16. When the steering motor 38 is rotated, the steering rod 32 is moved rightward and leftward, so that the right and left wheels 14 are steered together.

The reaction force actuator 12 is controlled by a reaction force electronic control unit (hereinafter referred to as a "reaction force ECU" where appropriate) 40 attached to the reaction force motor 24. The reaction force ECU 40 is constituted by a computer including a CPU, a ROM, a RAM and an inverter that is a driver (drive circuit) of the reaction force motor 24. The reaction force ECU 40 is powered by a battery. Similarly, the steering actuator 16 is controlled by a steering electronic control unit (hereinafter referred to as a "steering ECU" where appropriate) 42 attached to the steering motor 38. The steering ECU 42 is constituted by a computer including a CPU, a ROM, a RAM and an inverter that is a driver (drive circuit) of the steering motor 38. The steering ECU 42 is powered by the battery.

The reaction force ECU 40 and the steering ECU 42 cooperate with each other to constitute one controller of the present steering system. The reaction force ECU 40 and the steering ECU 42 are connected via a dedicated high-speed communication line 44. Both the reaction force ECU 40 and the steering ECU 42 are connected to a CAN (car area network or controllable area network) 46 of the vehicle. A vehicle speed sensor 48 for detecting a vehicle speed v, which is a traveling speed of the vehicle, is also connected to the CAN 46.

The reaction force actuator 12 includes, as a constituent element relating to the control, an operation torque sensor 50. Though not explained in detail, the operation torque sensor 50 detects a torsional amount of the steering shaft 22 to thereby detect an operation torque To, which is the operation force applied to the handle 10 by the driver. Further, the reaction force actuator 12 includes an operation angle sensor 52 configured to detect a rotational angle of the steering shaft 22 to thereby detect an operation angle δ of the handle 10 and a reaction force motor rotational angle sensor 54 configured to detect a rotational angle (rotational phase) θmc of the reaction force motor 24 for phase switching.

A steering angle of the wheels 14 and the positon of the steering rod 32 in the right-left direction have a specific relationship. Thus, the steering actuator 16 includes a steering angle sensor 56 configured to detect the position of the steering rod 32 for detecting the steering angle of the wheels 14. Briefly, a rack 58 is formed on the steering rod 32, and a pinion shaft 60 engaging the rack 58 is held by the housing 30. Though a turning angle (toe angle) of the wheel 14 may be considered as the steering angle, the rotational angle of the pinion shaft 60 detected by the steering angle sensor 56 is treated as the steering angle ω of the wheel 14 in the present system. The steering actuator 16 includes a steering motor rotational angle sensor 62 for detecting a rotational angle (rotational phase) θms of the steering motor 38 for phase switching.

### 2. Functions of Controller

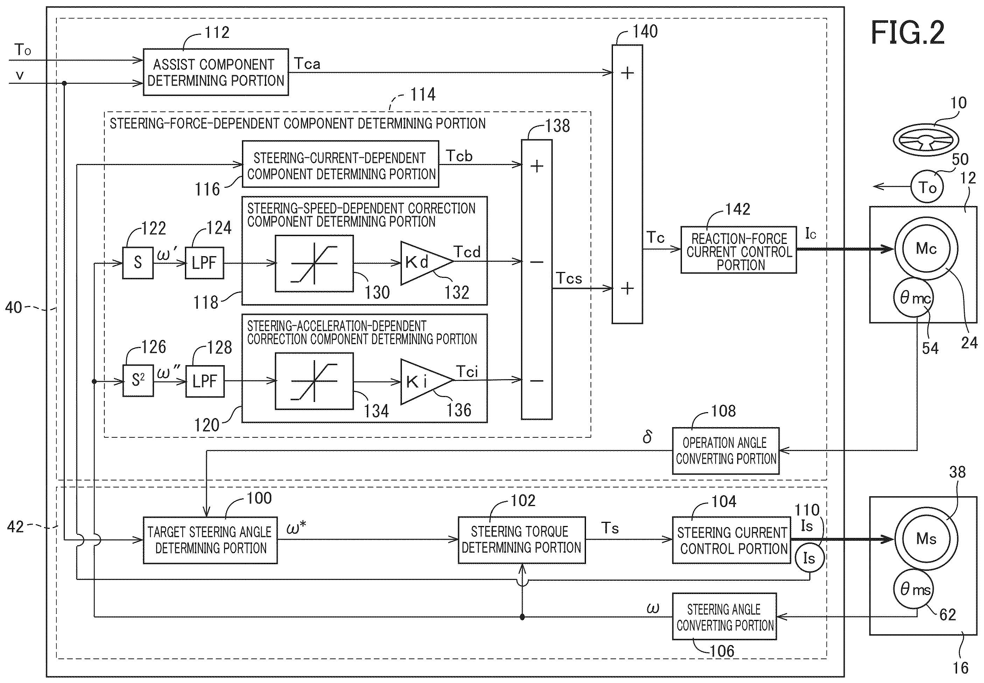

The controller of the present steering system including the reaction force ECU 40 and the steering ECU 42 has a functional configuration shown in a functional block diagram of FIG. 2. The computers execute respective predetermined programs to effectuate the functional configuration. Most of signals input to or output from the constituent elements (functional portions) shown in the drawing are signals indicating values of a torque, components thereof, a steering angle, an operation angle, and the like. For avoiding redundancy of the description, it is simply expressed in the following description that the torque, the components thereof, the steering angle, the operation angle, and the like are input to or output from the constituent elements. For ease of understanding, there will be described, in order, functions relating to a steering control by the steering ECU 42 and functions relating to a reaction force control by the reaction force ECU 40.

### (a) Steering Control

The steering control is a control of the steering angle ω of the wheels 14 steered by the steering actuator 16. The steering ECU 42, which functions as a steering control section, includes a target steering angle determining portion 100, a steering torque determining portion 102, and a steering current control portion 104.

In the control of the present steering system, the steering angle ω is used as the steering amount of the wheels 14. The steering angle ω is not a value detected by the steering angle sensor 56, but a value converted based on the steering motor rotational angle θms detected by the steering motor rotational angle sensor 62. Therefore, the steering ECU 42 includes a steering angle converting portion 106 for converting the steering motor rotational angle θms detected by the steering motor rotational angle sensor 62 to the steering angle ω. The steering angle ω and a cumulative amount of the steering motor rotational angle θms have a relationship to satisfy a predetermined speed reduction ratio. Thus, the steering angle converting portion 106 performs the conversion based on the speed reduction ratio.

The target steering angle determining portion 100 determines a target steering angle ω*, which is a control target of the steering angle ω, based on the operation angle δ converted by an operation angle converting portion 108 of the reaction force ECU 40 described later. In the present steering system, a steering gear ratio γ, that is, a ratio of the steering angle ω with respect to the operation angle δ, is changed depending on the vehicle speed v. The target steering angle determining portion 100 determines the target steering angle ω* based on the operation angle δ and the vehicle speed v referring to stored map data. Incidentally, the technique of changing the steering gear ratio γ is known, a description of which is dispensed with.

The steering torque determining portion 102 is a functional portion for determining a steering torque Ts required to steer the wheels 14. The steering torque Ts may be considered as a torque to be generated by the steering motor 38, for example. Specifically, the steering torque determining portion 102 determines a steering angle deviation Δω, which is a deviation of the steering angle ω with respect to the target steering angle ω*, based on the target steering angle ω* and the actual steering angle ω at the present time converted by the steering angle converting portion 106. According to a PID feedback control law based on the steering angle deviation Δω, the steering torque determining portion 102 determines the steering torque Ts to be generated. The determination technique according to the PID feedback control law is known, a detailed description of which is dispensed with.

The steering current control portion 104 includes an inverter that is a drive circuit (driver) for the steering motor 38. Based on the determined steering torque Ts, the steering current control portion 104 determines a steering current Is, which is a current to be supplied to the steering motor 38, and supplies the steering current Is to the steering motor 38 from the inverter. The steering ECU 42 includes a current sensor 110 for detecting the steering current Is that is being actually supplied.

### (b) Reaction Force Control

The reaction force ECU 40, which is a reaction force control section, controls the reaction force torque Tc to be applied to the handle 10 by the reaction force actuator 12, which is a reaction force applying device. The reaction force ECU 40 includes an assist component determining portion 112 for determining an assist component Tca that is a component of the reaction force torque Tc and a steering-force-dependent component determining portion 114 for determining the steering-force-dependent component Tcs that is another component of the reaction force torque Tc. The steering-force-dependent component Tcs includes a steering-current-dependent component Tcb that is a basic component, a steering-speed-dependent correction component (damping compensation component) Tcd which indicates a damping force due to the structure of the steering actuator 16 to correct the steering-current-dependent component Tcb, and a steering-acceleration-dependent correction component (inertia compensation component) Tci which indicates the inertia force relating to the motion of the steering actuator 16 to correct the steering-current-dependent component Tcb. The reaction force ECU 40 includes a steering-current-dependent component determining portion 116 for determining the steering-current-dependent component Tcb, a steering-speed-dependent correction component determining portion 118 for determining the steering-speed-dependent correction component Tcd, and a steering-acceleration-dependent correction component determining portion 120 for determining the steering-acceleration-dependent correction component Tci.

In the control of the steering system, an operation angle δ is utilized as an operation amount of the handle 10. Thus, like the steering ECU 42, the reaction force ECU 40 includes the operation angle converting portion 108 configured to convert the reaction force motor rotational angle θmc detected by the reaction force motor rotational angle sensor 54 to the operation angle δ. The operation angle δ and a cumulative amount of the reaction force motor rotational angle θmc have a relationship to satisfy a predetermined speed reduction ratio. Thus, the operation angle converting portion 108 performs the conversion based on the speed reduction ratio.

Determination of the components of the reaction force torque Tc will be described in order. The assist component Tca is a component similar to an assist force in what is called power steering. The assist component determining portion 112 determines the assist component Tca based on the operation torque To detected by the operation torque sensor 50 and the vehicle speed v. In short, the assist component Tca is determined so as to be a greater value with an increase in the operation torque To. Further, the assist component Tca is determined so as to be a smaller value when the vehicle speed v is high for giving the vehicle driver a heavy operation feeling with respect to the operation of the handle 10 and is determined so as to be a greater value when the vehicle speed v is low for giving the vehicle driver a light operation feeling with respect to the operation of the handle 10. The direction of the assist component Tca is the same as the operation direction of the handle 10, that is, the steering operation direction.

The steering-force-dependent component Tcs is considered as a main component of the reaction force torque Tc, and roughly speaking, it is a component for causing the driver to feel a steering force, which is a force required to steer the wheels 14. The steering-force-dependent component Tcs may be considered as a component based on a force (axial force) that acts on the steering rod 32 of the steering actuator 16 in the axial direction of the steering rod 32. In other words, the steering-force-dependent component Tcs is a component for causing the driver to feel also a force that acts on the wheels 14 from the road surface. The steering-force-dependent component Tcs is generally a component in a direction opposite to the steering operation direction.

The steering-current-dependent component Tcb is a basic component of the steering-force-dependent component Tcs, in other words, a main component of the steering-force-dependent component Tcs. The steering-current-dependent component determining portion 116 determines the steering-current-dependent component Tcb by multiplying an actual steering current Is detected by the current sensor 100 by a set current-dependent gain Kb. In the reaction force ECU 40, a steering speed ω' (=dω/dt) is calculated by a differentiator 122 based on the steering angle ω converted by the steering angle converting portion 106, and the steering speed ω' is output through a low-pass filter 124. Further, steering acceleration ω" (=d²ω/dt²) is calculated by a second-order differentiator 126 based on the steering angle ω, and the steering acceleration ω" is output through a low-pass filter 128. The steering-speed-dependent correction component determining portion 118 includes a limit processor 130 and a gain multiplier 132. The steering-speed-dependent correction component determining portion 118 determines the steering-speed-dependent correction component Tcd by multiplying the steering speed ω' output through the limit processor 130 by a damping compensation gain Kd. Similarly, the steering-acceleration-dependent correction component determining portion 120 includes a limit processor 134 and a gain multiplier 136. The steering-acceleration-dependent correction component determining portion 120 determines the steering-acceleration-dependent correction component Tci by multiplying the steering acceleration ω" output through the limit processor 134 by an inertia compensation gain Ki. The processing in the limit processors 130, 134 will be described in detail later.

A subtracter 138 corrects the steering-current-dependent component Tcb based on the steering-speed-dependent correction component Tcd and the steering-acceleration-dependent correction component Tci. As a result, the steering-force-dependent component Tcs is determined. The steering-force-dependent component Tcs and the assist component Tca are added by an adder 140 to determine the reaction force torque Tc.

The determined reaction force torque Tc is input to a reaction-force current control portion 142. The reaction-force current control portion 142 includes an inverter that is a drive circuit (driver) of the reaction force motor 24. The reaction-force current control portion 142 determines a reaction force current Ic, which is a current to be supplied to the reaction force motor 24, based on the reaction force torque Tc, and supplies the reaction force current Ic from the inverter to the reaction force motor 24.

### 3. Steering-Speed-Dependent Correction Component and Steering-Acceleration-Dependent Correction Component

As described above, the steering-speed-dependent correction component Tcd in the reaction force control may be considered as a component that indicates a damping force caused by friction or the like of the steering actuator 16. The steering-speed-dependent correction component Tcd is set so as to increase with an increase in the steering speed ω'. When the steering speed ω' increases to some extent, however, the steering-speed-dependent correction component Tcd becomes excessively large, so that the reaction force torque Tc, which is the operation reaction force, does not become appropriate, causing an unnatural feeling in the driver's steering operation. In the present system, therefore, a limit is imposed on the steering-speed-dependent correction component Tcd.

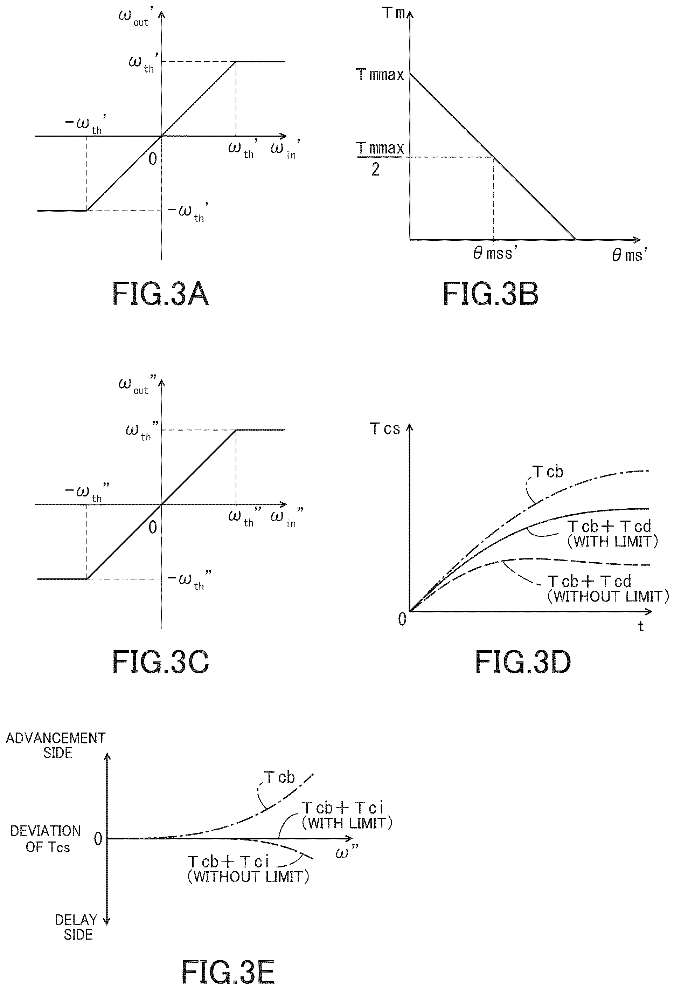

More specifically, as shown in the graph of FIG. 3A, the limit processor 130 of the steering-speed-dependent correction component determining portion 118 outputs an output steering speed ωout' for an input steering speed ωin'. That is, there is executed processing in which the steering speed ω' to be output does not exceed a set speed ωth'. The set speed ωth' is set to a value at which the steering speed ω' can be regarded as exceeding a speed in a normal steering operation when the steering speed ω' exceeds the set speed ωth', in other words, a value at which it can be estimated that an excessive steering operation is performed. By setting such an upper limit to the steering speed ω', the steering-speed-dependent correction component Tcd increases linearly with an increase in the steering speed ω' in a case where the steering speed ω' is equal to or lower than the set speed ωth' but the steering-speed-dependent correction component Tcd is maintained at a value at a time when the steering speed ω' becomes equal to the set speed ωth' in a case where the steering speed ω' exceeds the set speed ωth'.

Referring to the graph of FIG. 3B showing N-T characteristics (characteristics between motor rotational speed and torque) of the steering motor 38, the set speed ωth' is set to a steering speed ω' corresponding to a set motor rotational speed θmss', which is a motor rotational speed θms' (=dθms/dt) at which an output torque Tm of the steering motor 38 in the characteristic line falls within a range from not less than 40% to not greater than 60% of a maximum torque Tmmax, (specifically, 50%).

On the other hand, as described above, the steering-acceleration-dependent correction component Tci in the reaction force control can be considered as a component that indicates the inertia force (inertia) related to the motion of the steering actuator 16. The steering-acceleration-dependent correction component Tci is set so as to increase with an increase in the steering acceleration ω". Like the steering-speed-dependent correction component Tcd, however, the steering-acceleration-dependent correction component Tci becomes too large when the steering acceleration ω" increases to a certain extent, so that the reaction force torque Tc is not appropriate, thus causing an unnatural feeling in the steering operation of the driver. In the present system, therefore, the steering-acceleration-dependent correction component Tci is also limited.

More specifically, as shown in the graph of FIG. 3C, the limit processor 134 of the steering-acceleration-dependent correction component determining portion 120 is configured to output output steering acceleration ωout" for input steering acceleration ωin". In other words, there is executed processing in which the steering acceleration ω" does not exceed the set acceleration ωth". Like the set speed ωth', the set acceleration ωth" is set to a value at which the steering acceleration ω" can be regarded as exceeding acceleration in the normal steering operation when the steering acceleration ω" exceeds the set acceleration ωth", in other words, a value at which it can be estimated that the steering operation in an emergency is being performed. By setting such an upper limit to the steering acceleration ω", the steering-acceleration-dependent correction component Tci increases linearly with an increase in the steering acceleration ω" in a case where the steering acceleration ω" is equal to or less than the set acceleration ωth" but the steering-acceleration-dependent correction component Tci is maintained at a value at a time when the steering acceleration ω" becomes equal to the set acceleration ωth" in a case where the steering acceleration ω" exceeds the set acceleration ωth'.

More specifically, the set acceleration ωth" is set to a value (e.g., a maximum value) at a time when a reciprocating operation of the handle 10 at a frequency ranging from not lower than 1.5 Hz to not higher than 2.5 Hz (specifically, 2 Hz) is performed at the set speed ωth'.

The steering-speed-dependent correction component Tcd will be further described with reference to the graph of FIG. 3D. The graph of FIG 3D schematically shows a change in the steering-force-dependent component Tcs of the reaction force torque Tc when the steering speed ω' is increased with a lapse of time t. As indicated by the one-dot chain line in the graph, the steering-current-dependent component Tcb increases with an increase in the steering current Is. However, due to the characteristics of the steering motor 38, not all of the steering current Is contribute to the steering torque Ts. Thus, the reaction force torque Tc becomes excessive with only the steering-current-dependent component Tcb. To compensate for this, the steering-speed-dependent correction component Tcd is employed. However, if no limit is set for the steering-speed-dependent correction component Tcd, that is, if the upper limit is not set for the steering speed ω', the steering-force-dependent component Tcs becomes too small when the steering speed ω' is increased to some extent, as indicated by the dashed line in the graph. Therefore, by imposing the limitation on the steering-speed-dependent correction component Tcd, an appropriate steering-force-dependent component Tcs can be obtained, as indicated by the solid line in the graph. In other words, by limiting the steering-speed-dependent correction component Tcd, an appropriate operation reaction force is applied to the handle 10.

Next, the steering-acceleration-dependent correction component Tci will be further described with reference to the graph of FIG. 3E. The graph of Fig. 3E schematically shows a change in a deviation (that represents advancement and delay, i.e., phase shift) of the steering-force-dependent component Tcs of the reaction force torque Tc due to a change in the steering acceleration ω". As indicated by the one-dot chain line in the graph, if the steering-current dependent component Tcb is used alone, the steering-force-dependent component Tcs deviates to an advancement side, and the deviation increases with an increase in the steering acceleration ω". To compensate for this, the steering-acceleration-dependent correction component Tci is employed. However, if the limitation described above is not imposed on the steering-acceleration-dependent correction component Tci, namely, if the upper limit described above is not set for the steering acceleration ω", the steering-force-dependent component Tcs deviates to a delay side, and the deviation increases with an increase in the steering acceleration ω", as indicated by the dashed line in the graph when the steering acceleration ω" is increased to some extent. Therefore, by imposing the limitation described above on the steering-acceleration-dependent correction component Tci, an appropriate steering-force-dependent component Tcs is obtained as indicated by the solid line in the graph. In other words, by limiting the steering-acceleration-dependent correction component Tci, an appropriate operation reaction force is applied to the handle 10.

## Claims

1. A steer-by-wire steering system comprising: an operation member (10) to be operated by a driver; a reaction force applying device (12) configured to apply an operation reaction force to the operation member (10); a steering device (16) including a steering motor (38) that is an electric motor as a drive source and configured to steer a wheel (14); and a controller (40, 42) configured to control the reaction force applying device (12) and the steering device (16),
wherein the controller (40, 42) determines the operation reaction force including a steering-current-dependent component which is a component based on a current supplied to the steering motor (38) and a steering-speed-dependent correction component to reduce the steering-current-dependent component based on a steering speed; and
wherein the controller (40, 42) determines the steering-speed-dependent correction component such that when the steering speed exceeds a set speed, the steering-speed-dependent correction component is not larger than a value at the set speed.

2. The steer-by-wire steering system according to claim 1, wherein the set speed is set to a speed at which a torque that the steering motor (38) is capable of generating according to N-T characteristics falls within a range from not less than 40% to not greater than 60% of a maximum torque.

3. The steer-by-wire steering system according to claim 1 or 2,
wherein the controller (40, 42) determines the operation reaction force further including a steering- acceleration-dependent correction component to reduce the steering-current-dependent component based on steering acceleration, and
wherein the controller (40, 42) determines the steering-acceleration-dependent correction component such that when the steering acceleration exceeds set acceleration, the steering-acceleration-dependent correction component is not greater than a value at the set acceleration.

4. The steer-by-wire steering system according to claim 3, wherein the set acceleration is set to a value at which it is estimated that a steering operation in an emergency is performed.

5. The steer-by-wire steering system according to claim 3, wherein the set acceleration is set to a value at a time when an operation of the operation member (10) at a frequency ranging from not lower than 1.5 Hz to not higher than 2.5 Hz is performed at the set speed.
